# EUROPÄISCHE PATENTSCHRIFT

(11) **EP 1 448 904 B1**
(45) Veröffentlichungstag und Bekanntmachung des Hinweises auf die Patenterteilung: **31.08.2005**
(21) Anmeldenummer: 03750531.0
(22) Anmeldetag: 12.09.2003
(51) Int. Cl.: F16C 25/08, H02K 5/173, F16C 35/06

(54) **AUSSENLÄUFERMOTOR, UND VERFAHREN ZUM ZUSAMMENBAU EINES SOLCHEN**
EXTERNAL ROTOR MOTOR AND METHOD FOR ASSEMBLING SUCH A MOTOR
MOTEUR A INDUIT EXTERIEUR ET PROCEDE POUR MONTER UN TEL MOTEUR

(30) Priorität: 26.11.2002 DE 10254949
(43) Veröffentlichungstag der Anmeldung: 25.08.2004
(73) Patentinhaber: ebm-papst St. Georgen GmbH & Co. KG, 78112 St. Georgen (DE)
(72) Erfinder: ROJO LULIC, Francisco, 78112 St. Georgen (DE)
(74) Vertreter: Raible, Tobias
(86) Internationale Anmeldenummer: PCT/EP2003/010139
(87) Internationale Veröffentlichungsnummer: WO 2004/048791

(56) Entgegenhaltungen:
- DE-A- 4 202 153
- US-A- 5 562 347
- US-A- 6 144 135

## Beschreibung

Die Erfindung betrifft einen Außenläufermotor, und sie betrifft ein Verfahren zum Zusammenbau eines Außenläufermotors, siehe Oberbegriff des Anspruchs 1 bzw. des Anspruchs 7. Ein derartiger Hand der Technik ist aus der DE-A-4 202 153 bekannt.

Bei manchen Außenläufermotoren wird die Welle des Außenrotors in einem sogenannten Lagertragrohr gelagert, auf dessen Außenseite ein StatorBlechpaket befestigt ist. Die Welle ist meist an der Nabe einer sogenannten Rotorglocke befestigt und wird innerhalb des Lagertragrohres mittels Lagern gelagert, z.B. Sinterlagern oder Wälzlagern. Die Art der Lagerung hängt hauptsächlich von der gewünschten Lebensdauer des Motors und der gewünschten Laufruhe ab.

Zum Montieren der Welle hat das Lagertragrohr gewöhnlich auf seiner von der Rotorglocke abgewandten Seite eine Öffnung, wo sich Bauelemente befinden, die zur Sicherung oder. Lagerung der Welle dienen, z.B. ein Axiallager, ein Federglied, eine Sicherungsscheibe, ein Lagerdeckel, oder dergleichen. Durch diese Öffnung kann Schmutz eindringen und die Lebensdauer eines solchen Motors verringern. Auch wird für die Montage Zeit benötigt, was solche Motoren verteuert.

Es ist deshalb eine Aufgabe der Erfindung, einen neuen Außenläufermotor, und ein neues Verfahren zum Zusammenbau eines solchen, bereit zu stellen.

Nach einem ersten Aspekt der Erfindung wird diese Aufgabe gelöst durch einen Außenläufermotor gemäß Patentanspruch 1. Bei einem solchen Motor kann das Lagertragrohr an dem der Rotorglocke zugewandten Ende weitgehend verschlossen sein, so dass dort kein Schmutz eindringen kann. Auch ist er preiswert zu montieren.

Nach einem anderen Aspekt der Erfindung wird diese Aufgabe gelöst durch den Gegenstand des Anspruchs 7. Ein solcher Zusammenbau erfordert nur eine geringe Zahl von Arbeitsschritten und kann weitgehend oder auch vollständig automatisiert werden. Eine vorteilhafte Weiterbildung dieses Verfahrens ist Gegenstand des Anspruchs 8. So wird die Gefahr einer Beschädigung der Wälzlager bei der Montage verringert.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: eine Darstellung der wesentlichen Teile des Außenrotors eines Außenläufermotors, im Längsschnitt,
- Fig. 2: eine Darstellung analog Fig. 1, wobei aber auf der Welle des Außenrotors verschiedene Elemente für einen nachfolgenden Montagevorgang vormontiert sind,

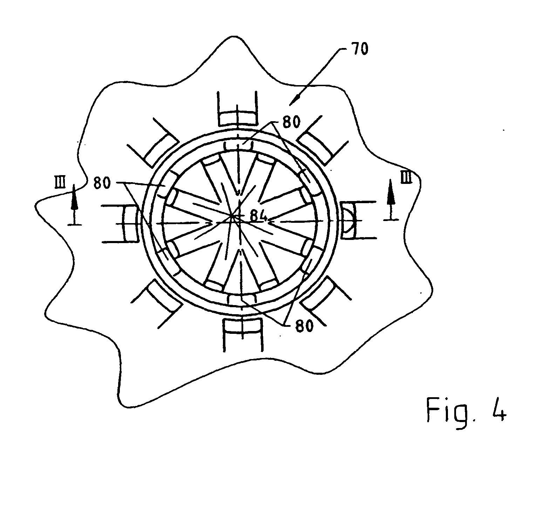

- Fig. 3: einen Längsschnitt durch ein am Stator des Motors vorgesehenes Lagertragrohr, gesehen längs der Linie III-III der Fig. 4,
- Fig. 4: eine Draufsicht auf das offene, proximale Ende des Lagertragrohres, gesehen in Richtung des Pfeiles IV der Fig. 3,
- Fig. 5: eine Darstellung analog Fig. 4, wobei aber auf dem Lagertragrohr eine Leiterplatte und ein mit einer Statorwicklung versehenes Statorblechpaket (lamination stack) vormontiert sind,
- Fig. 6: eine Schemadarstellung, welche eine Momentaufnahme bei der "Verheiratung" von Stator und Rotor zeigt,
- Fig. 7: einen Längsschnitt durch einen zusammengebauten Motor, wie er z.B. zum Antrieb eines Gerätelüfters Verwendung finden kann,
- Fig. 8: einen Schnitt durch eine sogenannte Sicherungsscheibe, gesehen längs der Linie VIII-VIII der Fig. 9, und
- Fig. 9: eine Draufsicht auf die Sicherungsscheibe, gesehen in Richtung des Pfeiles IX der Fig. 8.

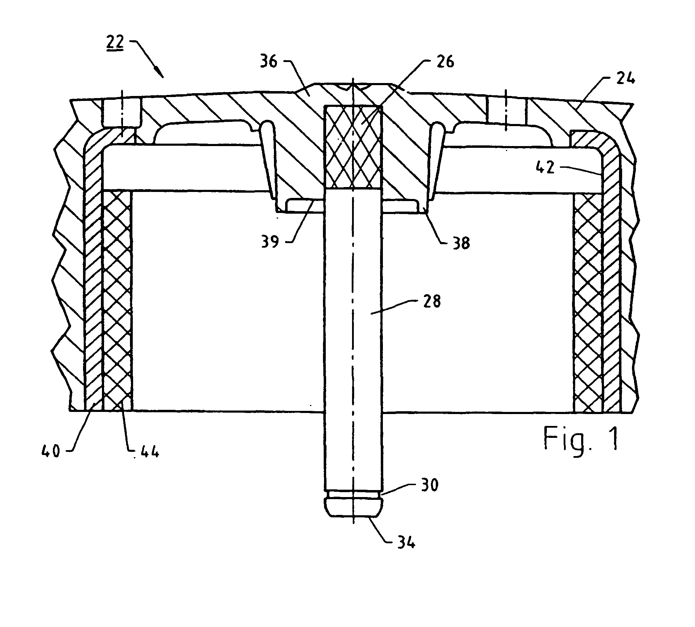

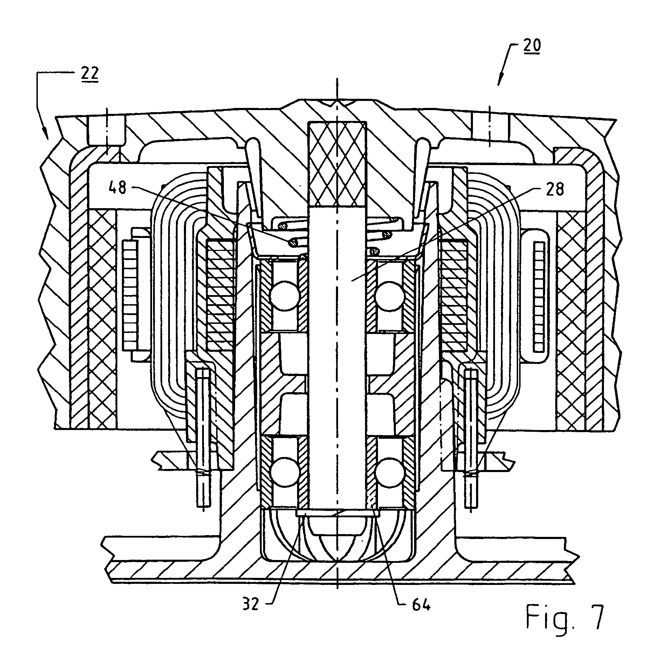

**Fig. 1** zeigt einen Außenrotor 22 für einen Außenläufermotor 20, wie er in Fig. 7 dargestellt ist. Der Außenrotor 22 hat eine Rotorglocke 24, die gewöhnlich aus Kunststoff oder einem Leichtmetall hergestellt ist.

Nachfolgend werden die Teile, die der Rotorglocke 24 zugewandt sind, analog dem Sprachgebrauch der Medizin als "proximal" und die Teile, die von der Rotorglocke 24 abgewandt sind, als "distal" bezeichnet.

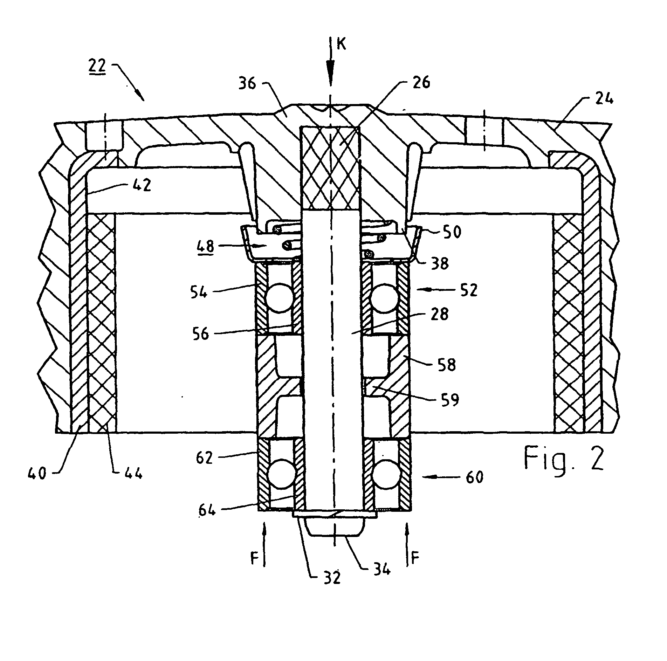

In der Mitte der Rotorglocke 24, also an deren Nabe 36, ist das proximale Ende 26 einer Welle 28 befestigt, an deren distalem Endbereich eine Ringnut 30 vorgesehen ist, welche gemäß Fig. 2 zur Befestigung eines Sprengrings 32 dient. Das distale Ende der Welle 28 ist mit 34 bezeichnet. Die Welle 28 hat einen kreiszylindrischen Querschnitt, und ihr Durchmesser ist praktisch über die gesamte Länge konstant. An der Nabe 36 befindet sich ein axialer Vorsprung 38, der in distaler Richtung von der Nabe 36 weg ragt und der in seiner Mitte einen vertieften Bereich 39 hat.

In der Rotorglocke 22 ist ein magnetischer Rückschluss in Form eines Blechrings 40 aus Weicheisen befestigt, und auf dessen Innenseite 42 befindet sich ein - gewöhnlich flexibler - Ring 44 aus permanentmagnetischem Werkstoff, meist ein sogenannter Gummimagnet, also eine Mischung aus ferromagnetischen Partikeln und einem Elastomer. Der Ring 44 ist in radialer Richtung mit der erforderlichen Zahl von Magnetpolen magnetisiert, z.B. mit vier Polen, wie das dem Fachmann geläufig ist.

Gemäß **Fig. 2** werden vor dem Zusammenbau des Motors 20 auf der Welle 28 verschiedene Bauelemente vormontiert.

Beginnend bei dem Vorsprung 38 ist das zunächst eine Druckfeder 48 von etwa kegeliger Gestalt, deren proximales Ende größeren Durchmessers in der Vertiefung 39 liegt.

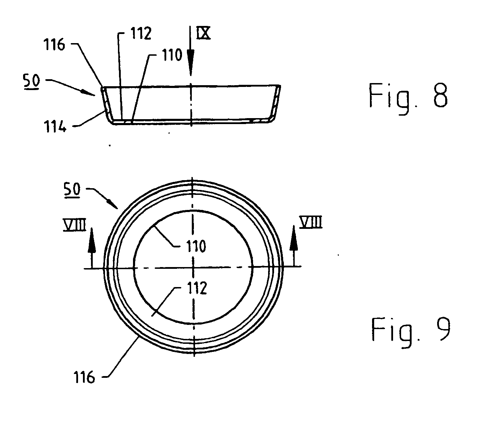

Auf die Feder 48 folgt in distaler Richtung ein ringförmiges Sicherungsglied in Form einer Sicherungsscheibe 50, wie sie nachfolgend anhand der Fig. 8 und 9 näher erläutert wird. Die Feder 48 liegt bevorzugt nicht gegen dieses Sicherungsglied 50 an.

Auf das Sicherungsglied 50 folgt ein proximales Wälzlager 52 mit einem Außenring 54 und einem Innenring 56. Letzterer ist auf der Welle 28 mit kleinem Spiel in axialer Richtung verschiebbar. Das distale Ende der Feder 48 liegt gegen das proximale Ende des Innenrings 56 an. Auf das Wälzlager 52 folgt in distaler Richtung ein Distanzstück 58, das mittels eines radial nach innen ragenden Vorsprungs 59 auf der Welle 28 verschiebbar geführt ist und dessen proximales Ende wie dargestellt gegen das distale Ende des Außenrings 54 anliegt.

Auf das Distanzstück 58 folgt ein distales Wälzlager 60 mit einem Außenring 62, der mit seinem proximalen Ende gegen das Distanzstück 58 anliegt, und mit einem Innenring 64, welcher auf der Welle 28 mit geringem Spiel in axialer Richtung verschiebbar ist und mit seinem distalen Ende wie dargestellt gegen den Sprengring 32 anliegt, wenn der Motor 20 fertig montiert ist. (Ggf. kann auch zwischen dem Sprengring 32 und dem Wälzlager 60 eine Distanzscheibe oder dgl. liegen, z.B. zum Ausgleich von Toleranzen.)

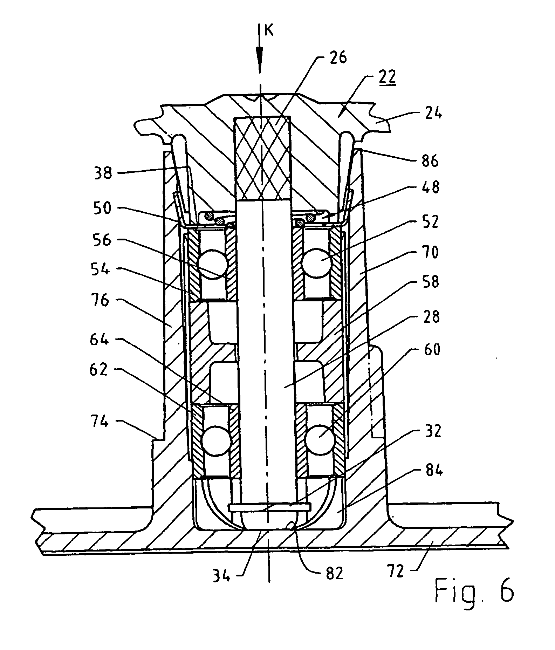

Wie man ohne weiteres erkennt, kann man, wenn man mit einer Kraft F in proximaler Richtung auf das distale Wälzlager 60 drückt, die Feder 48 zusammenpressen und dabei die beiden Kugellager 52 und 60, das Distanzstück 58 und die Sicherungsscheibe 50 in proximaler Richtung auf der Welle 28 verschieben, so dass der Innenring 64 nicht mehr gegen den Sprengring 32 anliegt, sondern einen Abstand von ihm bekommt. In diesem Fall kommt der Vorsprung 38 der Rotorglocke 24 zur Anlage gegen die Sicherungsscheibe 50 und ermöglicht es, über diese eine axiale Kraft in distaler Richtung auf die Sicherungsscheibe 50, den Außenring 54, das Distanzstück 58 und den Außenring 62 zu übertragen, wenn die Rotorglocke 24 durch eine Kraft K bei der Montage nach unten gepresst wird, also in distaler Richtung. Dies ist nachfolgend in Fig. 6 dargestellt.

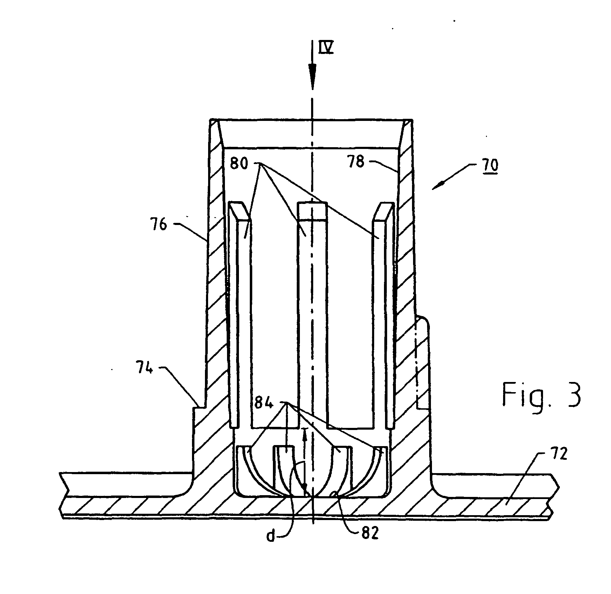

**Fig. 3** zeigt das Lagertragrohr 70 des Außenläufermotors 20, das gewöhnlich aus Kunststoff oder einem Leichtmetall hergestellt wird. Es hat bei dieser Ausführungsform unten einen Flansch 72, der zur Befestigung des Motors 20 dient, z.B. zu seiner Befestigung an einem Lüftergehäuse oder einem sonstigen anzutreibenden Gerät.

Auf seiner Außenseite hat das Lagertragrohr 70 eine Schulter 74, und daran anschließend in proximaler Richtung eine Umfangsfläche 76, die sich nach oben hin kegelstumpfförmig verjüngt.

Auf seiner Innenseite 78 hat das Lagertragrohr 70 sechs Längsrippen 80, die in einem Abstand d vom verschlossenen distalen Ende 82 des Lagertragrohres 70 enden. Auf sie folgen im distalen Bereich insgesamt acht Rippen 84, deren proximale Enden bei der Montage einen Anschlag für den Außenring 62 des distalen Kugellagers 60 bilden, vgl. Fig. 7. Diese Rippen 84 verjüngen sich in proximaler Richtung, damit das distale Ende 34 der Welle 28 bei der Montage genügend Platz hat, vgl. Fig. 6. An seinem oberen, proximalen Ende hat das Lagertragrohr Vorsprünge 86, vgl. Fig. 6.

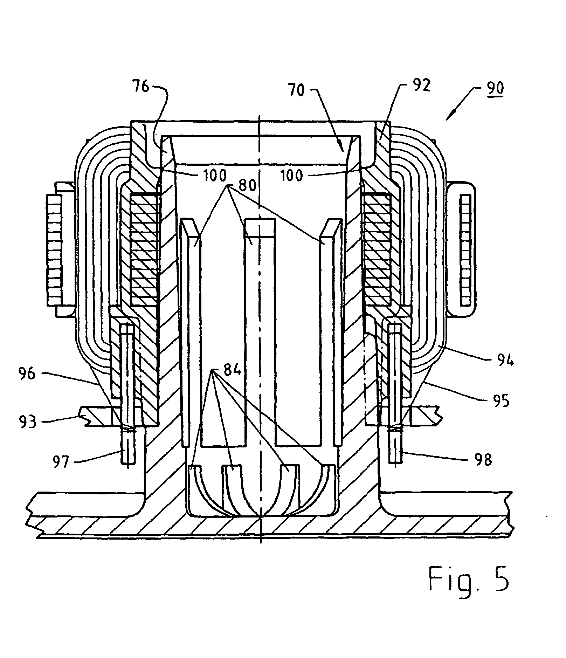

**Fig. 5** zeigt, wie ein Statorblechpaket 90 am Lagertragrohr 70 befestigt ist. Hierzu hat das Blechpaket 90 einen Spulenkörper 92 aus Kunststoff, in den eine Statorwicklung 94 gewickelt ist. Eine Leiterplatte ist bei 93 angedeutet. Fig. 5 zeigt zwei Wicklungsenden 95, 96, welche an einem zugeordneten Metallstift 98 bzw. 97 angelötet sind. Der Spulenkörper 92 hat, wie dargestellt, einen nach innen ragenden Vorsprung 100, mit dem er auf die Außenseite 76 des Lagertragrohres 70 aufgepresst ist.

**Fig. 6** zeigt sozusagen eine Momentaufnahme bei dem Vorgang der "Verheiratung", bei dem die Welle 28 des Rotors 22 mit den darauf befindlichen Wälzlagern 52, 60 erstmals in die innere Ausnehmung 78 (vgl. Fig. 3) des Lagertragrohres 70 eingeführt wird.

Hierbei wird eine Kraft K in distaler Richtung auf den Rotor 22 aufgebracht, und da die Außenringe 54, 62 der Wälzlager 52, 60 mit Presssitz in die Rippen 80 (vgl. Fig. 3) des Lagertragrohres 70 eingepresst werden, wird die Feder 48 durch die Kraft K zusammengepresst, so dass sich die Welle 28 in den Kugellagern 52, 60 in distaler Richtung verschiebt und der Vorsprung 38 über die Sicherungsscheibe 50 den Außenring 54 des Kugellagers 52 und über das Distanzglied 58 auch den Außenring 62 des Kugellagers 60 beaufschlagt und so die beiden Kugellager 52, 60 in das Lagertragrohr 70 einpresst. Wie in Fig. 6 dargestellt, wird hierbei die Feder 48 nur teilweise zusammen gepresst, um ihre Beschädigung zu vermeiden.

Das Einpressen setzt sich so lange fort, bis der Außenring 62 des distalen Kugellagers 60 gegen die proximalen Enden der Rippen 84 anliegt.

Hierbei verschiebt sich wie dargestellt das Sicherungsglied 50 im Lagertragrohr 70 in distaler Richtung, also nach unten, und gräbt sich dabei in das Material des Lagertragrohres 70 ein, so dass es die gesamte Lageranordnung im Lagertragrohr 70 verrastet/verriegelt. Würde man versuchen, entgegen der Kraft K den Rotor 22 aus dem Lagertragrohr 70 herauszuziehen, so würde sich das Sicherungsglied 50 nur umso tiefer in das Material des Lagertragrohres 70 eingraben, so dass es sich hier also um eine außerordentlich sichere Befestigung handelt. Naturgemäß gibt es für eine solche permanente Verrastung viele verschiedene Lösungen und Bauelemente, und das dargestellte Sicherungsglied 50 stellt deshalb nur eine bevorzugte Ausführungsform dar.

Nach dem vollständigen Einpressen wird die Kraft K weggenommen, und es ergibt sich dann das Bild nach Fig. 7, d.h. die Feder 48 drückt nun die Welle 28 wieder in proximaler Richtung so weit nach oben, bis der Sprengring 32 wieder gegen den Innenring 64 des distalen Wälzlagers 60 anliegt. Die Verheiratung ist dann abgeschlossen. Die Feder 48 verspannt jetzt die beiden Innenringe 56, 64 der Wälzlager 52, 60 gegeneinander, was für einen ruhigen Lauf des Motors 20 förderlich ist.

Die **Fig. 8 und 9** zeigen eine bevorzugte Ausführungsform eines Sicherungsglieds 50. Dieses hat in der Mitte eine Ausnehmung 110 für die Durchführung der Welle 28 und des distalen Endes der Druckfeder 48. Die Ausnehmung 110 befindet sich in einem flachen Teil 112, an den sich nach außen hin ein kegelstumpfförmiger Abschnitt 114 anschließt, dessen in Fig. 8 oberes Ende 116 sich bei der Montage in das Material des Lagertragrohres 70 eingräbt, weil sein Durchmesser größer ist als der Innendurchmesser des Lagertragrohrs 70.

Der Abschnitt 114 könnte durch Schlitze, welche in axialer Richtung verlaufen, in eine Mehrzahl einzelner Krallen aufgeteilt sein. In diesem Fall kann man ein solches ringartiges Sicherungsglied auch als Krallenscheibe oder Krallenring bezeichnen. Es ist jedoch meist nicht erforderlich, solche einzelnen Krallen vorzusehen. Auch kann es sehr vorteilhaft sein, die Feder 48 und das Sicherungsglied 50 zusammen als ein einziges Bauelement auszuführen. Man kann z.B. diese Teile zusammenschweißen, oder man kann die Feder 48 direkt aus dem Material des Sicherungsgliedes 50 heraus arbeiten.Auch sonst sind im Rahmen der vorliegenden Erfindung vielfache Abwandlungen und Modifikationen möglich.

## Patentansprüche

1. Außenläufermotor (20), welcher aufweist:
Einen Außenrotor (22), welcher eine Rotorglocke (24) und eine Welle (28) aufweist, welch letztere mit ihrem der Rotorglocke (24) zugewandten proximalen Ende (26) an dieser befestigt und im Bereich ihres von der Rotorglocke (24) abgewandten distalen Endes (34) mit einer Verbreiterung (32) versehen ist;
einen Stator (90), an welchem ein Lagertragrohr (70) vorgesehen ist, das eine Innenausnehmung (78, 80) aufweist;
Wälzlager (52, 60), welche im Lagertragrohr (70) angeordnet sind, jeweils einen Innenring (56, 64) und einen Außenring (54, 62) aufweisen, und deren Außenring (54, 62) jeweils in der Innenausnehmung (78, 80) des Lagertragrohres (70) geführt ist, welche Wälzlager zur Lagerung der Welle (28) des Außenrotors (22) dienen und von denen ein proximales Wälzlager (52) näher bei der Rotorglocke (24) angeordnet ist als ein distales Wälzlager (60), wobei die Welle (28) in den Innenringen (56, 64) dieser Wälzlager (52, 60) in Achsrichtung verschiebbar ausgebildet ist;
ein Sicherungsglied (50), welches dazu dient, zumindest das proximale Wälzlager (52) nach der Montage in seiner Stellung im Lagertragrohr (70) festzuhalten;
ein zwischen dem proximalen Wälzlager (52) und der Rotorglocke (24) wirksames Federglied (48), welches die Rotorglocke (24) weg vom proximalen Wälzlager (52) beaufschlagt, um die an der Welle (28) vorgesehene Verbreiterung (32) in Richtung zum distalen Ende des distalen Wälzlagers (60) zu beaufschlagen; und ein im Lagertragrohr (70) verschiebbar angeordnetes Distanzglied (58), welches zwischen dem Außenring (54) des proximalen Wälzlagers (52) und dem Außenring (62) des distalen Wälzlagers (60) einen vorgegebenen Abstand definiert, **dadurch gekennzeichnet, daß** des Sicherungsglied (50) zwischen Rotorglocke (24) und proximalem Wälzlager (52) angeordnet ist.

2. Motor nach Anspruch 1, bei welchem die Rotorglocke (24) auf ihrer dem proximalen Wälzlager (52) zugewandten Seite einen Vorsprung (38) aufweist, welcher zur Anlage gegen das Halteglied (50) ausgebildet ist.

3. Motor nach Anspruch 1 oder 2, bei welchem das Distanzglied (58) einen nach innen ragenden Vorsprung (59) aufweist.

4. Motor nach einem der vorhergehenden Ansprüche, bei welchem die an der Welle (28) vorgesehene Verbreiterung (32) als Sprengring oder dergleichen ausgebildet ist, welcher im montierten Zustand gegen das distale Ende des Innenrings (64) des distalen Wälzlagers (60) anliegt.

5. Motor nach einem der vorhergehenden Ansprüche, bei welchem das Federglied (48) das proximale Ende des Innenrings (56) des proximalen Wälzlagers (52) beaufschlagt.

6. Motor nach einem der vorhergehenden Ansprüche, bei welchem das Lagertragrohr (70) auf seiner von der Rotorglocke (24) abgewandten Seite verschlossen ist.

7. Verfahren zur Montage des Rotors (22) eines Außenläufermotors (20) an einem Lagertragrohr (70) und in einer vorgegebenen axialen Stellung relativ zu diesem,
welcher Rotor (22) eine Rotorglocke (24) und eine Rotorwelle (28) aufweist, **dadurch gekennzeichnet, daß**
a) beginnend bei der Rotorglocke (24) auf der Rotorwelle (28) eine Druckfeder (48), ein Sicherungsglied (50) und eine Lageranordnung mit einer Mehrzahl von Wälzlagern angebracht werden, wobei die Innenringe (56, 64) der Wälzlager (52, 60) auf der Rotorwelle (28) gleitend verschiebbar sind;
b) die auf der Rotorwelle (28) angeordneten Elemente mittels einer Einpresskraft (K) in das Lagertragrohr (70) eingepresst werden, wobei die Druckfeder (48) zusammengepresst wird und die Rotorglocke (24) das Sicherungsglied (50) in das Lagertragrohr (70) einpresst; und
c) die Einpresskraft (K) weggenommen wird, und durch die Druckfeder (48) die Rotorwelle (28) in den Innenringen der Wälzlager (52, 60) so verschoben wird, dass der Rotor (22) die vorgegebene axiale Stellung relativ zum Lagertragrohr (70) einnimmt.

8. Verfahren nach Anspruch 7, bei welchem an der der Rotorglocke (24) ein axialer Vorsprung (38) vorgesehen ist, welcher nach dem Zusammenpressen der Druckfeder (48) das Sicherungsglied (50) an einer Stelle beaufschlagt, welche im Bereich des Außenrings (54) eines Wälzlagers (52) liegt, um so die Einpresskraft (K) auf diesen Außenring (54) zu übertragen.

## Claims

1. External rotor motor (20) which comprises:
an external rotor (22) which comprises a rotor bell (24) and a shaft (28), which shaft is fastened by its proximal end (26) facing the rotor bell (24) to the latter and is provided with a widening (32) in the area of its distal end (34) facing away from the rotor bell (24);
a stator (90) on which is provided a bearing supporting tube (70) which comprises an internal recess (78, 80); roller bearings (52, 60) which are arranged in the bearing supporting tube (70) and each comprise an internal ring (56, 64) and an external ring (54, 62) and whose external ring (54, 62) is in each case guided in the internal recess (78, 80) of the bearing supporting tube (70), which roller bearings serve for supporting the shaft (28) of the external rotor (22) and a proximal roller bearing (52) of which is arranged closer to the rotor bell (24) than a distal roller bearing (60), the shaft (28) being embodied displaceable in the axial direction in the internal rings (56, 64) of these roller bearings (52, 60);
a securing member (50) which serves to hold at least the proximal roller bearing (52) securely in its position in the bearing supporting tube (70) after assembly;
a spring member (48) which acts between the proximal roller bearing (52) and the rotor bell (24) and forces the rotor bell (24) away from the proximal roller bearing (52) in order to force the widening (32) provided on the shaft (28) in the direction toward the distal end of the distal roller bearing (60);
and a spacing member (58) which is arranged displaceably in the bearing supporting tube (70) and defines a predetermined space between the external ring (54) of the proximal roller bearing (52) and the external ring (62) of the distal roller bearing (60), **characterised in that** the securing member (50) is arranged between the rotor bell (24) and the proximal roller bearing (52).

2. Motor according to claim 1, wherein on its side facing the proximal roller bearing (52) the rotor bell (24) comprises a projection (38) which is embodied to bear against the securing member (50).

3. Motor according to claim 1 or 2, wherein the spacing member (58) comprises a projection (59) which projects towards the inside.

4. Motor according to one of the preceding claims, wherein the widening (32) provided on the shaft (28) is embodied as a snap ring or the like which when fitted bears against the distal end of the internal ring (64) of the distal roller bearing (60).

5. Motor according to one of the preceding claims, wherein the spring member (48) acts on the proximal end of the internal ring (56) of the proximal roller bearing (52).

6. Motor according to one of the preceding claims, wherein the bearing supporting tube (70) is closed on its side facing away from the rotor bell (24).

7. Method for assembling the rotor (22) of an external rotor motor (20) on a bearing supporting tube (70) and in a predetermined axial position relative to the latter, which rotor (22) comprises a rotor bell (24) and a rotor shaft (28), **characterised in that**
a) beginning at the rotor bell (24), a compression ring (48), a securing member (50) and a bearing arrangement with a plurality of roller bearings are mounted on the rotor shaft (28), the internal rings (56, 64) of the roller bearings (52, 60) being displaceable slidingly on the rotor shaft (28);
b) the elements arranged on the rotor shaft (28) are pressed into the bearing supporting tube (70) by means of an impressing force (K), the compression spring (48) being compressed and the rotor bell (24) pressing the securing member (50) into the bearing supporting tube (70); and
c) the impressing force (K) is removed and the rotor shaft (28) is displaced in the internal rings of the roller bearings (52, 60) by the compression spring (48) so that the rotor (22) adopts the predetermined axial position relative to the bearing supporting tube (70).

8. Method according to claim 7, wherein the rotor bell (24) is provided with an axial projection (38) which after compression of the compression spring (48) acts on the securing member (50) at a point which lies in the area of the external ring (54) of a roller bearing (52) in order to transfer the impressing force (K) to this external ring (54).

## Revendications

1. Moteur à induit extérieur (20), lequel présente :
un rotor extérieur (22), lequel présente une cloche de rotor (24) et un arbre (28), ce dernier étant fixé à la cloche de rotor (24) par son extrémité proximale (26) tournée vers celle-ci et étant muni au niveau de son extrémité distale (34) opposée à la cloche de rotor (24) d'un élargissement (32) ;
un stator (90) sur lequel est prévu un tube support de palier (70) qui présente un évidement intérieur (78, 80) ;
des paliers à roulement (52, 60) qui sont disposés dans le tube support de palier (70), présentent chacun une bague intérieure (56, 64) et une bague extérieure (54, 62) et dont la bague extérieure (54, 62) est guidée dans l'évidement intérieur (78, 80) du tube support de palier (70), lesquels paliers à roulement servent au logement de l'arbre (28) du rotor extérieur (22) et parmi lesquels un palier à roulement proximal (52) est disposé plus près de la cloche de rotor (24) qu'un palier à roulement distal (60), l'arbre (28) étant conçu de manière à être déplaçable en direction axiale dans les bagues intérieures (56, 64) de ces paliers à roulement (52, 60) ;
un élément d'arrêt (50), lequel sert à retenir au moins le palier à roulement proximal (52) dans sa position dans le tube support de palier (70) après le montage ;
un élément à ressort (48) actif entre le palier à roulement proximal (52) et la cloche de rotor (24), lequel contraint la cloche de rotor (24) à distance du palier à roulement proximal (52) pour contraindre l'élargissement (32) prévu sur l'arbre (28) en direction de l'extrémité distale du palier à roulement distal (60) ;
et un élément d'écartement (58) déplaçable dans le tube support de palier (70), lequel définit une distance définie entre la bague extérieure (54) du palier à roulement proximal (52) et la bague extérieure (62) du palier à roulement distal (60),
**caractérisé par le fait que** l'élément d'arrêt (50) est disposé entre la cloche de rotor (24) et le palier à roulement proximal (52).

2. Moteur selon la revendication 1, dans lequel la cloche de rotor (24) présente sur son côté tourné vers le palier à roulement proximal (52) une saillie (38) qui est conçue pour s'appuyer contre l'élément d'arrêt (50).

3. Moteur selon la revendication 1 ou 2, dans lequel l'élément d'écartement (58) présente une saillie (59) dépassant vers l'intérieur.

4. Moteur selon l'une des revendications précédentes, dans lequel l'élargissement (32) prévu sur l'arbre (28) est formé par un circlip ou bague de butée ou analogue qui, à l'état monté, s'appuie contre l'extrémité distale de la bague intérieure (64) du palier à roulement distal (60).

5. Moteur selon l'une des revendications précédentes, dans lequel l'élément à ressort (48) contraint l'extrémité proximale de la bague intérieure (56) du palier à roulement proximal (52).

6. Moteur selon l'une des revendications précédentes, dans lequel le tube support de palier (70) est fermé de son côté opposé à la cloche de rotor (24).

7. Procédé pour monter le rotor (22) d'un moteur à induit extérieur (20) sur un tube support de palier (70) et dans une position axiale définie par rapport à celui-ci,
lequel rotor (22) présente une cloche de rotor (24) et un arbre de rotor (28),
**caractérisé par le fait que**
a) en commençant à la cloche de rotor (24), on monte sur l'arbre de rotor (28) un ressort de compression (48), un élément d'arrêt (50) et une disposition de paliers comprenant une pluralité de paliers à roulement, les bagues intérieures (56, 64) des paliers à roulement (52, 60) étant déplaçables par glissement sur l'arbre de rotor (28) ;
b) on enfonce les éléments montés sur l'arbre de rotor (28) dans le tube support de palier (70) au moyen d'une force de pression (K), à l'occasion de quoi le ressort de compression (48) est comprimé et la cloche de rotor (24) presse l'élément d'arrêt (50) dans le tube support de palier (70) ; et
c) on enlève la force de pression (K) et l'arbre de rotor (28) est déplacé par le ressort de compression (48) dans les bagues intérieures des paliers à roulement (52, 60) de telle manière que le rotor (22) prend la position axiale définie par rapport au tube support de palier (70).

8. Procédé selon la revendication 7, dans lequel il est prévu sur la cloche de rotor (24) une saillie axiale (38) qui, après la compression du ressort de compression (48), contraint l'élément d'arrêt (50) à une position qui se situe au niveau de la bague extérieure (54) d'un palier à roulement (52) afin de transmettre ainsi la force de pression (K) à cette bague extérieure (54).
